# EUROPEAN PATENT APPLICATION

(11) **EP 3 002 354 A1**
(43) Date of publication of application: **06.04.2016**
(21) Application number: 15187649.7
(22) Date of filing: 30.09.2015
(51) Int. Cl.: D04C 1/06, B29B 11/02, B29C 70/22

(54) **IN-SITU CONFORMABLE TRIAXIAL BRAIDED STRUCTURE**

(30) Priority: 30.09.2014 US 201462057618 P
(71) Applicant: A & P Technology, Inc., Cincinnati, OH 45245-1055 (US)
(72) Inventor: HEAD, Adrew, Cincinnati, OH 45243 (US); KEHRL, David, Everett, WA 98203 (US)
(74) Representative: Croston, David

(57) **Abstract**

Triaxial braided structures are prepared according to one or more conformance orientations that facilitate conformability to a variety of shapes during deployment.

## Description

### CROSS-REFERENCE TO RELATED APPLICATION

This patent application claims priority to and the benefit of pending provisional patent application 62/057,618 filed on September 30, 2014 which is incorporated by reference herein in its entirety.

### TECHNICAL FIELD

The present subject matter relates generally to braided structures. More particularly, the present subject matter relates to triaxial braided structures conformable to various surfaces.

### BACKGROUND

Braided structures are used extensively in the manufacture of composite parts as reinforcements materials embedded in a resin matrix. It is also known to use braided structures as distinct components within an assembly of parts, for instance, as a blade-out containment component in a jet engine component. Braided structures are often preferred over other types of structures, such as woven structures, because tows of material within the structure can be oriented along non-perpendicular directions and the structures can either conform to a surface upon application or be manufactured in to conform to a specific surface.

### SUMMARY

Aspects disclosed include a braided structure comprising a series of longitudinal tows extending in a braided structure longitudinal direction, a first series of bias tows extending in a first bias direction, and a second series of bias tows extending in a second bias direction. The series of longitudinal tows, the first series of bias tows, and the second series of bias tows are woven to define the braided structure, and the braided structure is arranged according to a conformance orientation. The conformance orientation is not wholly aligned with the braided structure longitudinal direction, the first bias direction, or the second bias direction, and the conformance orientation is configured to conform to an irregular structure.

In further embodiments of the innovations, a method for forming a braided structure is disclosed. The method includes providing a series of longitudinal tows, providing a first series of bias tows, and providing a second series of bias tows. The method also includes braiding the series of longitudinal tows, the first series of bias tows, and the second series of bias tows into a braided structure such that the longitudinal tows as braided extend through a braided structure longitudinal direction. The first series of bias tows extend through a first bias direction, and the second series of bias tows extend through a second bias direction. Thereafter, the method includes cutting the braided structure according to a conformance orientation. The conformance orientation is not wholly aligned with the braided structure longitudinal direction, the first bias direction, or the second bias direction, and the conformance orientation is configured to conform to an irregular structure.

There is also disclosed a method of forming a braided structure. The method includes providing a series of longitudinal tows, providing a first series of bias tows, and providing a second series of bias tows. The method also includes braiding the series of longitudinal tows, the first series of bias tows, and the second series of bias tows into a braided structure. The longitudinal tows as braided extend through a braided structure longitudinal direction, the first series of bias tows extend through a first bias direction, and the second series of bias tows extend through a second bias direction. The braided structure is braided according to a conformance orientation, and the conformance orientation is not wholly aligned with the braided structure longitudinal direction, the first bias direction, or the second bias direction. The conformance orientation is configured to conform to an irregular structure.

### BRIEF DESCRIPTION OF THE DRAWINGS

Figure 1 illustrates an example triaxial braided structure;
Figure 2 illustrates a conformance orientation in relation to a triaxial braided structure;
Figure 3 illustrates a triaxial braided structure arranged in a conformance orientation; and
Figure 4 illustrates a triaxial braided structure prepared according to a conformance orientation as applied to a curved object.

### DETAILED DESCRIPTION

Braided structures are comprised of two or more sets of tows wherein the tows within each set are generally parallel at the time of manufacture if formed on a cylindrical surface whose axis is parallel to the longitudinal direction of the braided structure. The tows in each set of tows are generally each intertwined with tows in the opposing set in a repetitive pattern.

The terms "strand", "tow", "yarn", "yarn bundle", "fiber" and "fiber bundle" are generally meant to describe what is laid into or intertwined in each of the principal directions of a braided structure. In this disclosure the term "tow" will generally be used to describe what is laid into or intertwined in each of the principal directions of a braided structure. A tow is an amalgamation of all material that runs together in a principal direction. A tow can comprise monofilaments, multiple filaments or be comprised of staple, or spun, material. Tow material can have a variety of cross-sectional shapes, including but not limited to, generally circular, ellipsoidal, triangular and flat tape shapes. Tow material may be subject to intermediate or pre-processing prior to braiding operations. Examples of intermediate or pre-processing may include, but are not limited to, twisting, braiding small numbers of filaments into braided tow materials, pre-impregnation with resins and specialty coating to facilitate braiding and/or subsequent processing. A tow can comprise any combination of these materials and material forms. Any one tow may comprise one or more filament or staple materials. As non-limiting examples, a tow may be comprised of carbon materials, basalt, glass materials, thermoplastic polymeric materials, thermoset polymeric materials, a combination of carbon and polymeric materials or a combination of polymeric and glass materials, or some combination thereof.

Common terms used to describe braided structures are based on a Cartesian system of directions and rotations as applied to a plane surface considered to be formed from cylindrical surface after it is slit in the direction of the cylinder axis and the cylindrical surface rolled out into a plane.

The longitudinal direction of braided structures is often used as a reference direction when describing the orientations of sets of tows in the braided structure. The longitudinal direction is often referred to as the axial direction. Directions oblique to the longitudinal direction are often referred to as bias directions. Oblique directions oriented at angles clockwise to the axial direction are generally referred to as positive bias directions and those oriented at angles counterclockwise to the axial direction are generally referred to as negative bias directions.

Biaxial braided structures have two sets of tows, one oriented along a positive bias direction and the other along a negative bias direction. A typical shorthand description of the orientations of the two sets within a biaxial braided structure is comprised of a positive and a negative number each numerating the bias angle for a set of tows. For example, a biaxial braided structure called Bimax, manufactured by A&P technology, Inc., is designated as a +45°/-45° braid.

An inherent feature of biaxial braided structures is that the tows comprising the braided structure can move relative to one another and allow the braided structure to conform to a range of surfaces without compromising the braided structure or the tows. After conformation to a specific surface the general relative orientation of tows within sets and set to set is maintained and may be best understood by considering the Cartesian system to have been mapped onto the surface.

Triaxial braided structures have three sets of tows. Two sets are oriented as described for biaxial structures. The third set of tows is oriented along the axial direction and intertwined with the first and second set of tows. A typical shorthand description for a triaxial braid structure includes the angular orientation of each tow set relative to the axial direction and the axial direction itself to better convey that the braided structure is triaxial. For example, a triaxial braided structure marketed as Qiso, manufactured by A&P Technology, is designated as a+60°/0°/-60° braid structure.

The addition of axial tows restricts relative motion of tows thereby generally locking the structure in the as-manufactured geometry. Triaxial braided structures are generally used in sheet or tubular form or are manufactured to conform to a specific surface at the time of manufacture.

Triaxial braided structures may be manufactured to conform to a specific surface at the time of manufacture by overbraiding onto a specific surface so that the locking action of the axial tows occurs as the braided structure is laid on the surface and the geometry of the braided structure assumes and retains its as-manufactured configuration.

Once manufactured, it is difficult to apply a triaxial braided structure over a surface different from that as-manufactured surface without incurring folds, undulations, bunching and similar defects.

There is a need for a triaxial braided structure that can conform in situ to a range of surfaces after the point of manufacture without incurring folds, undulations, bunching and similar defects. An in-situ conformable triaxial braided structure may conform to a range of surfaces with the axial and bias tows generally following paths approximating the structure in the Cartesian plane mapping onto the conform surface.

The triaxial braided structure of the present subject matter provides a range of in-situ conformability after manufacture. The braided structure is comprised of at least one layer of triaxial braided material, said layer comprised of tows laid in along two oblique, or bias, angles and tows laid along the longitudinal direction and intertwined with the bias tows. The triaxial braided structure may be manufactured in a sleeve form by conventional means and single or doubly slit and laid flat to form a conventional triaxial broadgood.

The triaxial broadgood may then be trimmed at an oblique angle not equal to the bias angle to form a triaxial broadgood with non-equal bias angles. For example, a +60°/0°/-60° triaxial broadgood may be trimmed at an angle, relative to the axial direction, between 0° and 30° degrees inclusive. After trimming the longitudinal direction of the fabric lies parallel to the trimline and the resulting braid structure is characterized by the directions of the two oblique bias tows and one axial tow relative to the new longitudinal direction of the fabric. For example, trimming the +60°/0°/-60° triaxial broadgood at 30° relative to the original longitudinal direction of the fabric in a preferred embodiment of the present subject matter results in a braid architecture characterized as +90°/30°/-30°. This embodiment results in the shortest fiber lengths in each of the principal directions of the fabric.

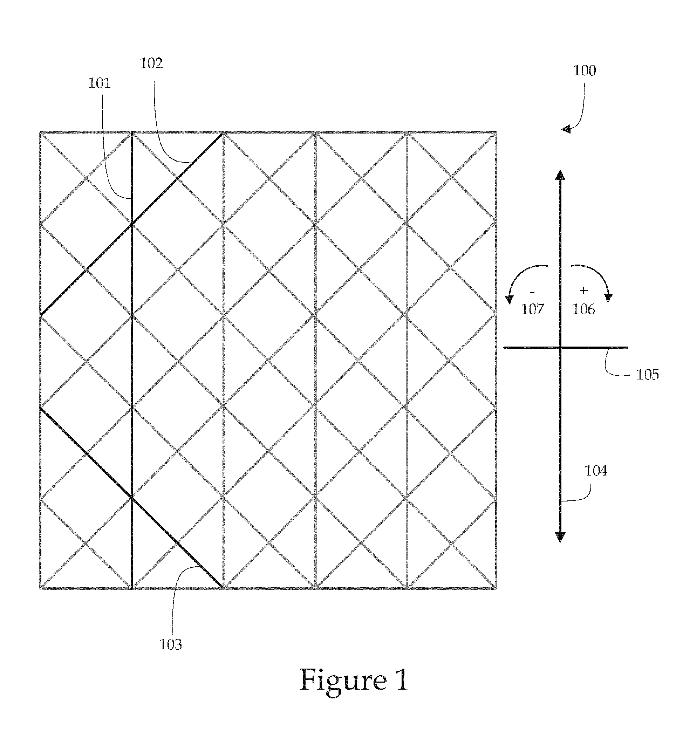

To assist with understanding of the triaxial braided structure, Figure 1 illustrates an example embodiment. Braided structure 100 includes longitudinal tow 101, positive bias tow 102, and negative bias tow 103. Longitudinal tow 101 extends in braided structure longitudinal direction 104 and is one in a series of similarly arranged tows. Positive bias tow 102 is one in a series of positive bias tows with an angular orientation clockwise 106 to braided structure longitudinal direction 104. Negative bias tow 103 is one in a series of negative bias tows with an angular orientation counterclockwise 107 to braided structure longitudinal direction 104. Depending on the braiding technique, these braided structures can be at least partially self-locking as described above inasmuch as the individual tows may resist unraveling due to interlocking friction between the braided tows.

Braided structure 100 or other braided structures can be modified to place the braided structure in a conformance orientation. A conformance orientation, as used herein, is an arrangement of a braided structure calculated to best conform to irregular shapes. In this regard, having a longitudinal tow or bias tow incident to a particular surface of an irregularly-shaped object to which the braided structure is deployed may permit the braided structure to most flatly overlay the object, avoiding bunching or pulling. Depending on, *e.g.,* a radius of curvature associated with the irregularly-shaped object, particular conformance orientations may be more suited for deploying braided structures than others. In embodiments, particular conformance orientations can be determined to cover ranges of curvature for irregularly-shaped objects. In embodiments, a conformance orientation can include cutting a subsection from a braided structure at angle(s) to the tows of the structure. In further embodiments, parallel cuts can be made establishing a new lengthwise braided structure in accordance with the conformance orientation such that the edges of the structure establishing its length or width are not aligned with at least the longitudinal tows. In an alternative embodiment, the braided structure can be braided according to the conformance orientation such that the longitudinal tows extend at angle(s) to outer edges of the braided structure, thus obviating the need to cut the braided structure to achieve the conformance orientation.

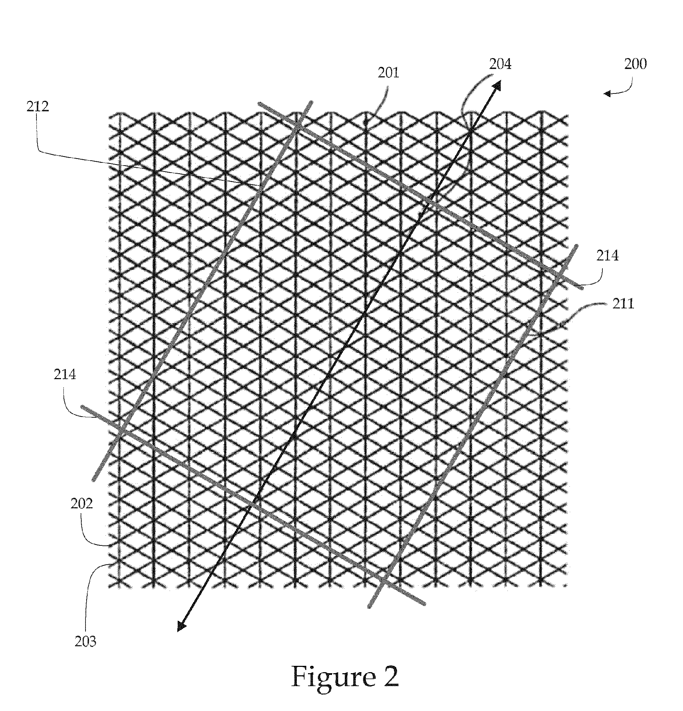

Depicting a cutting embodiment, Figure 2 illustrates a plan view of a schematic representation of a +60°/0°/-60° triaxial braided structure 200 trimmed along at least a first trimline 211 at a conformance angle relative to the original longitudinal direction defined by longitudinal tows 201 of the fabric. By cutting braided structure 200 at the conformance angle, a conformance orientation can be accomplished. In the illustrated embodiment, the conformance angle is approximately 30° and the resultant braid architecture is characterized relative to conformance longitudinal direction 204 as a +90°/30°/-30° braid. The conformance orientation can further be accomplished by cutting along second trimline 212, third trimline 213, and fourth trimline 214 to provide a rectangular cutout from the original braided structure 200. In this regard, the longitudinal direction of longitudinal tows 201 in reference to the overall shape of braided structure 200 in Figure 2 establishes an arbitrary orientation agnostic to the end product to which braided structure 200 will be applied, and braided structure 200 can (but need not exclusively) be prepared in a conformance orientation by cutting.

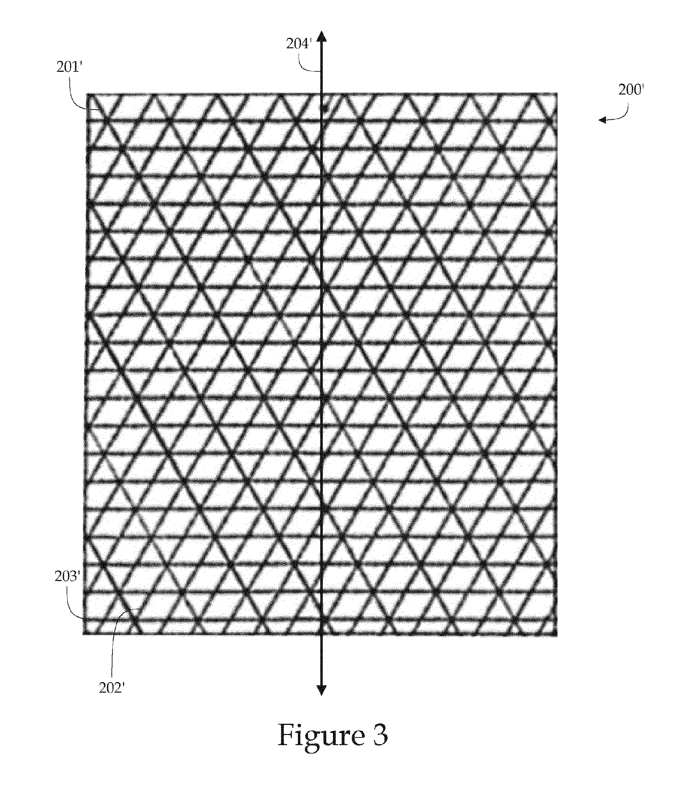

Turning to Figure 3, the triaxial braided structure according to the conformance orientation 200' has a range of conformability making it particularly suitable for composite layup of arcuate shapes. The new longitudinal direction of the structure 204', which defined the conformance angle, is on angle to longitudinal tows 201', positive bias tows 202', and negative bias tows 203'. Such arcuate shapes can include those such as deployed to, *e.g.,* composite fuselage frames for aircraft. The range of conformability is determined at least in part by the ability of the free ends of the tows in each of the principal directions to withdraw from the edge to allow for some change in relative lengths of tows as the trimmed triaxial braided structure follows the curvature of the form over which it is laid.

While Figure 3 illustrates the conformance orientation as being based on substantially straight cuts through a braided structure to define new structure edges and tow angles with respect to such edges, various other conformance orientations can be utilized. Whether through cutting or by manufacturing a braided structure such that the tows are arranged at an angle to one or more edges in the un-cut form, the edges of the braided structure in the conformance orientation need not be straight, symmetrical, or regular, and can include straight, curved, sawtooth or zig-zag, or other arrangements in at least one direction to best permit the desired flexibility in the conformance orientation.

In this regard, while the above description of Figure 3 describes an embodiment where a previously braided structure is cut to a conformance orientation, braided structure 200' can be braided in the orientation shown in some embodiments to obviate the need for cutting the braided structure to achieve geometries supporting the conformance orientation. In this regard, the braided structure longitudinal tows (or others) would be produced in a manner such that their direction through the braided structure does not align with edges or sides of the braided structure.

Either to reduce or prevent unraveling of unfinished ends after braiding or cutting, an edge treatment can be applied. The edge treatment can include the temporary application of removable adhesives such as a tape or other solid-backed removable adhesive. The adhesive can be selected based on its strength of adhesion such that it will prevent undesired unraveling but permit edges to displace appropriately when deploying the braided structure in the conformance orientation to an irregular object.

Other possible edge treatments include hot melting loose edges, applying non-removable adhesives, and/or the inclusion of one or more edge tows braided near an outer edge (as-braided or after cutting) of a braided structure in a conformance orientation to prevent unraveling. The strength of the edge treatment can be prepared to permit more (*e.g.,* hot melt securing edges entirely) or less (*e.g.,* hot melt that allows tows to be pulled loose from edges and resultant movement within structure) flexibility in the edges while avoiding undesired loss of braiding.

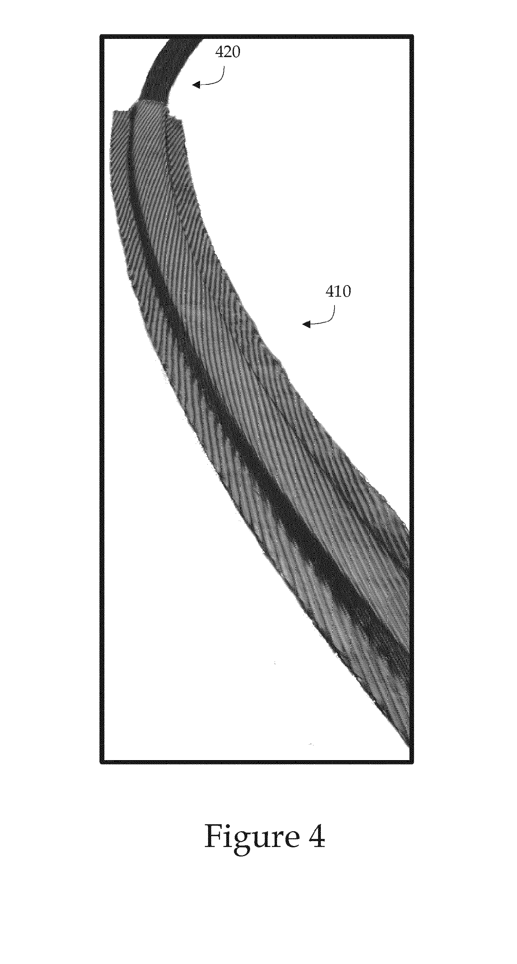

Figure 4 shows a braided structure 410 laid around a curved object 420. In this regard, braided structure 410 has been cut to a conformance orientation such that braided structure 410 can be laid over curved object 420 without bunching or other undesired effects. After being laid around curved object 420, braided structure 410 can be secured in its current form, or undergo additional processing/ post-processing steps (such as, *e.g.,* resin application) to complete its deployment to curved object 420.

In further embodiments of the innovations, a method for forming a braided structure is disclosed. The method includes providing a series of longitudinal tows, providing a first series of bias tows, and providing a second series of bias tows. The method also includes braiding the series of longitudinal tows, the first series of bias tows, and the second series of bias tows into a braided structure such that the longitudinal tows as braided extending through a braided structure longitudinal direction, the first series of bias tows extending through a first bias direction, and the second series of bias tows extending through a second bias direction. Thereafter, the method includes cutting the braided structure according to a conformance orientation. The conformance orientation is not wholly aligned with the braided structure longitudinal direction, the first bias direction, or the second bias direction, and the conformance orientation is configured to conform to an irregular structure.

An alternative method can include providing a series of longitudinal tows, providing a first series of bias tows, and providing a second series of bias tows. The method also includes braiding the series of longitudinal tows, the first series of bias tows, and the second series of bias tows into a braided structure. The longitudinal tows as braided extend through a braided structure longitudinal direction, the first series of bias tows extend through a first bias direction, and the second series of bias tows extend through a second bias direction. The braided structure is braided according to a conformance orientation, and the conformance orientation is not wholly aligned with the braided structure longitudinal direction, the first bias direction, or the second bias direction. The conformance orientation is configured to conform to an irregular structure.

While the above generally describes triaxial braided structures, it is appreciated that biaxial structures, or structures having four or more tow directions, can be utilized in particular embodiments as well

While the above subject matter has been illustrated and described in detail in the drawings and foregoing discussion, the same is to be considered as illustrative and not restrictive in character, it being understood that exemplary embodiments have been shown and described and that all changes and modifications that come within the spirit of the invention are desired to be protected by the appended claims and equivalents thereof.
1. A braided structure, comprising:
   a series of longitudinal tows extending in a braided structure longitudinal direction;
   a first series of bias tows extending in a first bias direction; and
   a second series of bias tows extending in a second bias direction,
   the series of longitudinal tows, the first series of bias tows, and the second series of bias tows woven to define the braided structure,
   the braided structure arranged according to a conformance orientation,
   the conformance orientation is not wholly aligned with the braided structure longitudinal direction, the first bias direction, or the second bias direction,
   the conformance orientation is configured to conform to an irregular structure.
2. The braided structure of clause 1, the braided structure is braided as a continuous structure of arbitrary orientation and cut to the conformance orientation.
3. The braided structure of clause 1, further comprising an edge treatment applied after cutting.
4. The braided structure of clause 3, the edge treatment includes a removable adhesive.
5. The braided structure of clause 1, the braided structure is braided to the conformance orientation.
6. The braided structure of clause 1, the conformance orientation includes a conformance angle defined by at least one edge of the braided structure in the conformance orientation.
7. The braided structure of clause 6, the braided structure is rectangular and the conformance angle is an angle defined by at least two parallel cut edges in relation to the braided structure longitudinal direction.
8. The braided structure of clause 1, the conformance orientation varies along at least one dimension of the braided structure.
9. The braided structure of clause 8, the conformance orientation includes a curve along at least one edge of the braided structure.
10. A method of forming a braided structure, comprising:
   providing a series of longitudinal tows;
   providing a first series of bias tows;
   providing a second series of bias tows;
   braiding the series of longitudinal tows, the first series of bias tows, and the second series of bias tows into a braided structure, the longitudinal tows as braided extending through a braided structure longitudinal direction, the first series of bias tows extending through a first bias direction, and the second series of bias tows extending through a second bias direction; and
   cutting the braided structure according to a conformance orientation,
   the conformance orientation is not wholly aligned with the braided structure longitudinal direction, the first bias direction, or the second bias direction,
   the conformance orientation is configured to conform to an irregular structure.
11. The method of clause 10, further comprising treating at least one edge of the braided structure after cutting the braided structure according to the conformance orientation.
12. The method of clause 11, wherein treating the at least one edge of the braided structure includes applying a removable adhesive.
13. The method of clause 10, the conformance orientation is an angle defined by at least one direction of a cut with reference to the braided structure longitudinal direction.
14. The method of clause 13, the braided structure is rectangular and the conformance angle is the angle defined by at least two parallel cut rectangular edges in relation to braided structure longitudinal direction.
15. The method of clause 10, the conformance orientation varies along at least one dimension of the braided structure.
16. A method of forming a braided structure, comprising:
   providing a series of longitudinal tows;
   providing a first series of bias tows; and
   providing a second series of bias tows; and
   braiding the series of longitudinal tows, the first series of bias tows, and the second series of bias tows into a braided structure, the longitudinal tows as braided extending through a braided structure longitudinal direction, the first series of bias tows extending through a first bias direction, and the second series of bias tows extending through a second bias direction,
   the braided structure braided according to a conformance orientation,
   the conformance orientation is not wholly aligned with the braided structure longitudinal direction, the first bias direction, or the second bias direction,
   the conformance orientation is configured to conform to an irregular structure.
17. The method of clause 16, further comprising treating at least one edge of the braided structure after braiding the braided structure according to the conformance orientation.
18. The method of clause 17, wherein treating the at least one edge of the braided structure includes applying a removable adhesive.
19. The method of clause 16, the conformance orientation is an angle defined by at least one direction of a cut with reference to the braided structure longitudinal direction.
20. The method of clause 16, the conformance orientation varies along at least one dimension of the braided structure.

## Claims

1. A braided structure, comprising:
a series of longitudinal tows extending in a braided structure longitudinal direction;
a first series of bias tows extending in a first bias direction; and
a second series of bias tows extending in a second bias direction,
the series of longitudinal tows, the first series of bias tows, and the second series of bias tows woven to define the braided structure,
the braided structure arranged according to a conformance orientation,
the conformance orientation is not wholly aligned with the braided structure longitudinal direction, the first bias direction, or the second bias direction,
the conformance orientation is configured to conform to an irregular structure.

2. The braided structure of claim 1, the braided structure is braided as a continuous structure of arbitrary orientation and cut to the conformance orientation.

3. The braided structure of claims 1 or 2, further comprising an edge treatment applied after cutting, preferably an edge treatment including a removable adhesive.

4. The braided structure of claim 1, the braided structure is braided to the conformance orientation.

5. The braided structure of any of claims 1 to 4, the conformance orientation includes a conformance angle defined by at least one edge of the braided structure in the conformance orientation.

6. The braided structure of claim 5, the braided structure is rectangular and the conformance angle is an angle defined by at least two parallel cut edges in relation to the braided structure longitudinal direction.

7. The braided structure of any of claims 1 to 4, the conformance orientation varies along at least one dimension of the braided structure, and/ or the conformance orientation includes a curve along at least one edge of the braided structure.

8. A method of forming a braided structure, comprising:
providing a series of longitudinal tows;
providing a first series of bias tows;
providing a second series of bias tows;
braiding the series of longitudinal tows, the first series of bias tows, and the second series of bias tows into a braided structure, the longitudinal tows as braided extending through a braided structure longitudinal direction, the first series of bias tows extending through a first bias direction, and the second series of bias tows extending through a second bias direction; and
placing the braided structure in a conformance orientation,
the conformance orientation is not wholly aligned with the braided structure longitudinal direction, the first bias direction, or the second bias direction,
the conformance orientation is configured to conform to an irregular structure.

9. The method of claim 8, further comprising placing the braided structure in a conformance orientation by cutting the braided structure according to the conformance orientation.

10. The method of claim 8, further comprising placing the braided structure in a conformance orientation by braiding the braided structure according to a conformance orientation.

11. The method of any one of claims 10 to 12, further comprising treating at least one edge of the braided structure after placing the braided structure in the conformance orientation.

12. The method of claim 11, wherein treating the at least one edge of the braided structure includes applying a removable adhesive.

13. The method of any of claims 10 to 12, the conformance orientation is an angle defined by at least one direction of a cut with reference to the braided structure longitudinal direction.

14. The method of claim 13, the braided structure is rectangular and the conformance angle is the angle defined by at least two parallel cut rectangular edges in relation to braided structure longitudinal direction.

15. The method of any of claims 10 to 14, the conformance orientation varies along at least one dimension of the braided structure.
